(19) **Europäisches Patentamt European Patent Office Office européen des brevets**

(11) **EP 2 680 287 B1**

(12) **FASCICULE DE BREVET EUROPEEN**

(45) Date de publication et mention de la délivrance du brevet:
**13.01.2016 Bulletin 2016/02**

(21) Numéro de dépôt: **13173459.2**

(22) Date de dépôt: **24.06.2013**

(51) Int Cl.:
*H01G 11/52* (2013.01)   *H01G 11/10* (2013.01)
*H01G 11/24* (2013.01)   *H01G 11/28* (2013.01)
*H01M 2/14* (2006.01)

(54) **Agencement pour dispositif supercondensateur, dispositif supercondensateur comprenant l'agencement, procédé de fabrication d'un agencement**

Anordnung für Superkondensatorvorrichtung, Superkondensatorvorrichtung, die eine solche Anordnung umfasst, und Herstellungsverfahren einer solchen Anordnung

Arrangement for a supercapacitor device, supercapacitor device comprising the arrangement, method for producing an arrangement

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.06.2012 FR 1255976**

(43) Date de publication de la demande:
**01.01.2014 Bulletin 2014/01**

(73) Titulaire: **COMMISSARIAT A L'ENERGIE ATOMIQUE ET AUX ENERGIES ALTERNATIVES
75015 Paris (FR)**

(72) Inventeurs:
• **Besesty, Pascal
  38410 Vaulnaveys le Haut (FR)**
• **Bidan, Gérard
  38100 Grenoble (FR)**
• **Hadji, Emmanuel
  38600 Fontaine (FR)**

(74) Mandataire: **Novaimo
Bâtiment Europa 2
310 avenue Marie Curie
Archamps Technopole
74166 Saint-Julien-en-Genevois Cedex (FR)**

(56) Documents cités:
**EP-A1- 1 973 188      JP-A- 2009 016 787
JP-A- 2009 199 962      JP-A- 2010 087 290
US-A1- 2011 043 967**

## Description

### Domaine technique de l'invention

L'invention concerne le domaine des supercondensateurs.

L'invention a pour objet plus particulièrement un agencement pour dispositif supercondensateur comprenant une électrode munie d'un élément électriquement conducteur.

### État de la technique

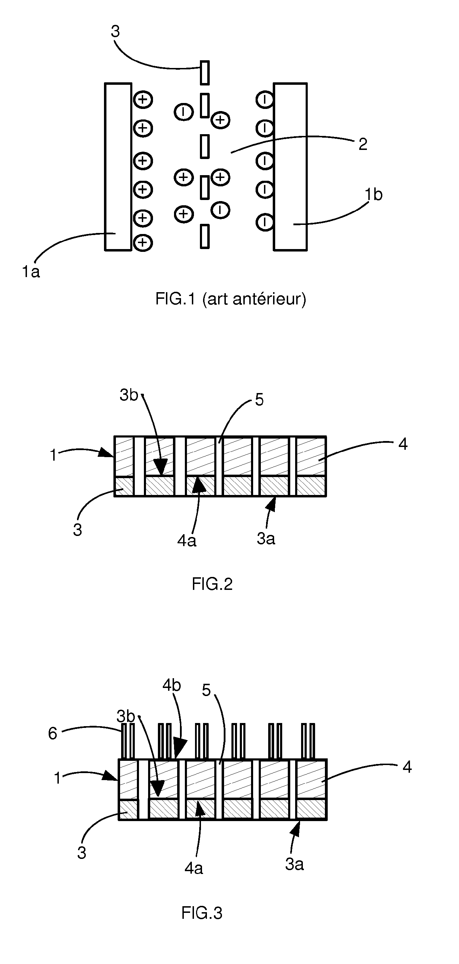

Comme illustré à la figure 1, les supercondensateurs, ou les supercondensateurs pseudocapacitifs, comportent deux électrodes poreuses 1a, 1b, généralement en charbon actif. Ces électrodes 1a, 1b sont séparées par un electrolyte 2, et sont imprégnées de cet électrolyte 2. L'électrolyte 2 peut être un liquide organique, un liquide ionique ou encore un ionogel. Un élément séparateur 3, disposé dans l'électrolyte 2, agit comme une membrane électriquement isolante pour éviter les courts-circuits entre les électrodes 1a, 1b, cette membrane est aussi poreuse aux ions de l'électrolyte 2 pour le bon fonctionnement du supercondensateur. Cet élément séparateur 3 peut être réalisé par exemple en polypropylène (PP) ou en polyéthylène (PE) ou en multicouche comme PP/PE/PP, mais il peut aussi être formé par une membrane cellulosique mettant en oeuvre du papier cellulosique avec des fibres polymères de renfort.

La capacité d'un supercondensateur est essentiellement déterminée par la géométrie des armatures mettant en oeuvre sa surface spécifique S (la surface active, en regard, des deux électrodes du supercondensateur utilisées pour les échanges), par une distance e séparant les électrodes, et de la nature du, ou des, isolant(s) utilisé(s) pour réaliser l'élément séparateur (en prenant $\varepsilon_0$ la permittivité diélectrique du vide = 8,854pF m$^{-1}$). La formule suivante est utilisée pour estimer la valeur de la capacité C du supercondensateur :

$$C = \varepsilon_0 \ S/e$$

Dans le cas d'un supercondensateur avec un électrolyte et un séparateur, la formule s'écrit :

$$C = \varepsilon_{re}\varepsilon_{rs}\varepsilon_0 \ S/e$$

Où $\varepsilon_{re}$ représente la permittivité de l'électrolyte, cette permittivité pouvant être comprise entre 3 à 40 pour la plupart des solvants organiques, et $\varepsilon_{rs}$ représente la permittivité du séparateur.

Cet exemple repose sur un supercondensateur électrochimique mais le principe est le même pour un supercondensateur de type pseudocapacitif reposant sur le concept de la double couche.

En général, une électrode telle que décrite ci-dessus est formée par une plaque en aluminium sur laquelle est déposé un charbon actif qui présente une surface spécifique S de 2000m$^2$ à 3000m$^2$ par gramme. La surface de contact de l'électrode ainsi formée est immense, permettant d'obtenir des valeurs de capacités considérables.

Cette technologie est difficile à miniaturiser. La microélectronique peut être une solution mais le carbone usuellement utilisé n'est pas un bon candidat dans le cadre d'une utilisation microélectronique où le silicium est généralement préféré.

JP 2009 016787 décrit un agencement pour dispositif supercondensateur troué d'une pluralité de trous débouchants qui traversent à la fois l'élément électriquement conducteur et l'élément séparateur.

Les supercondensateurs tels que décrits ci-dessus mettent en oeuvre de nombreux composés à manipuler (électrodes, élément séparateur et électrolyte), manipulation qui devient d'autant plus difficile lors de la miniaturisation. Cette miniaturisation entraîne alors des problèmes lors de l'assemblage.

### Objet de l'invention

Le but de la présente invention est de proposer une solution facilement industrialisable, et dont la manipulation est facilitée lors de l'assemblage. On tend vers ce but en ce que l'agencement comporte un élément séparateur fixé contre une première face de l'élément électriquement conducteur, l'agencement étant troué d'une pluralité de trous débouchants qui traversent à la fois l'élément électriquement conducteur et l'élément séparateur, et l'élément séparateur troué forme une membrane d'une part électriquement isolante, et d'autre part poreuse à des ions d'un électrolyte du dispositif supercondensateur et de préférence en ce que l'élément électriquement conducteur de l'électrode étant perforé, la surface équivalence des électrodes du dispositif supercondensateur est dépendante du nombre de trous réalisés et de leur profondeur.

Selon une mise en oeuvre, l'électrode comporte une pluralité de nano-éléments, notamment des nanofils ou des nanotubes électriquement conducteurs, s'étendant à partir d'une seconde face de l'élément électriquement conducteur, opposée à la première face de l'élément électriquement conducteur.

Avantageusement, l'élément séparateur est une couche diélectrique trouée, par exemple une couche d'oxyde d'épaisseur supérieure à 1 nm.

Avantageusement, l'électrode comporte un matériau semi-conducteur ou un métal.

Selon une mise en oeuvre, au moins un trou débouchant de la pluralité de trous débouchants de l'agencement comporte un tronçon au niveau duquel l'élément séparateur recouvre une portion de l'élément électriquement conducteur le long de l'axe dudit trou.

L'invention est aussi relative à un dispositif supercondensateur comportant un agencement dont une face de l'élément séparateur, opposée à la face de l'élément séparateur en contact avec l'élément électriquement conducteur, est en contact avec un électrolyte du dispositif supercondensateur.

Avantageusement l'extrémité libre d'au moins un nano-élément est en contact avec l'élément séparateur d'un autre agencement.

Selon une mise en oeuvre, le dispositif comporte une pluralité d'agencements, deux agencements adjacents étant séparés par de l'électrolyte de sorte à former un élément unitaire supercondensateur, l'électrolyte de l'élément unitaire étant en contact avec l'élément séparateur de l'un des agencements de l'élément unitaire et avec l'électrode de l'autre des agencements de l'élément unitaire.

De préférence, au moins une partie de la pluralité d'agencements forme un premier ensemble d'éléments unitaires supercondensateurs reliés électriquement en parallèle.

Avantageusement, une autre partie de la pluralité d'agencements forme un deuxième ensemble d'éléments unitaires supercondensateurs reliés électriquement en parallèle, le premier ensemble et le deuxième ensemble étant reliés électriquement en série.

Selon une mise en oeuvre, le dispositif comporte pour chaque électrode un élément de liaison relié électriquement à ladite électrode par câblage de type microélectronique ultrasonique ou par thermocompression.

L'invention est aussi relative à un procédé de fabrication d'au moins un agencement pour dispositif supercondensateur comportant les étapes suivantes :

- Prévoir un substrat électriquement conducteur, notamment à base de semi-conducteur, dont au moins une partie est destinée à former l'élément électriquement conducteur de l'agencement,

- Former, au niveau d'une première face du substrat , une couche en matériau électriquement isolant dont au moins une partie est destinée à former l'élément séparateur de l'agencement,

- Former une pluralité de trous débouchants traversant à la fois le substrat et la couche en matériau électriquement isolant.

Avantageusement, le procédé comporte une étape de formation d'une pluralité de nano-éléments s'étendant à partir d'une seconde face du substrat, opposée à la première face du substrat, lesdits les nano-éléments étant obtenus par croissance à partir de plots de catalyseurs disposés sur la seconde face du substrat.

Les plots de catalyseurs peuvent être formés avant la formation de la pluralité de trous.

Si le substrat est un métal, les plots de catalyseur sont formés par le métal restant entre les trous débouchants après la formation de la pluralité de trous.

Selon une mise en oeuvre particulière, l'étape de formation de la pluralité de nano-éléments comporte :

- une étape de dépôt d'une couche de catalyseur sur la seconde face du substrat, ladite couche de catalyseur étant destinée à former les plots de catalyseur, l'étape de dépôt de la couche de catalyseur étant réalisée avant la formation de la pluralité de trous de sorte que chaque trou de la pluralité de trous traverse aussi ladite couche de catalyseur,

- une étape de refonte de la couche de catalyseur, réalisée après la formation de la pluralité de trous, de sorte à former une pluralité de plots de catalyseur, notamment de billes de catalyseurs, au niveau de la seconde face du substrat,

- une étape de croissance des nano-éléments à partir des plots de catalyseur.

## Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :

- la figure 1 est une vue illustrant schématiquement l'art antérieur,

- la figure 2 est une vue en coupe d'un mode de réalisation d'un agencement selon l'invention,

- la figure 3 illustre un perfectionnement du mode de réalisation de la figure 2,

- la figure 4 illustre un dispositif supercondensateur mettant en oeuvre deux agencements selon la figure 2,

- la figure 5 illustre un dispositif supercondensateur muni de quatre agencements selon la figure 2,

- la figure 6 illustre un ensemble d'éléments unitaires supercondensateurs reliés électriquement en parallèle pour favoriser la capacité du dispositif supercondensateur,

- la figure 7 illustre deux ensembles selon la figure 6 reliés en série pour favoriser la tension du dispositif supercondensateur tout en gardant une grande capacité,

- les figures 8 à 11 illustrent différentes étapes d'un procédé de fabrication d'un agencement,

- la figure 12 illustre une vue en coupe d'une réalisation particulière d'un agencement.

## Description de modes préférentiels de l'invention

Sur la figure 2, un agencement pour dispositif supercondensateur comprend une électrode 1 munie d'un élément électriquement conducteur 4. En outre, l'agencement comporte un élément séparateur 3 fixé contre une première face 4a de l'élément électriquement conducteur 4. L'agencement est troué d'une pluralité de trous débouchants 5 traversant à la fois l'élément électriquement conducteur 4 et l'élément séparateur 3. De préférence, tous les trous de la pluralité de trous sont débouchants, cependant d'autres trous n'appartenant pas à la pluralité de trous peuvent être présents, et ces trous peuvent être, par exemple, borgnes.

En fait, l'élément séparateur 3 troué, et ainsi associé à l'électrode 1, forme une membrane d'une part électriquement isolante et d'autre part poreuse à des ions d'un électrolyte du dispositif supercondensateur. Les dimensions des trous seront donc adaptées de sorte à réaliser la fonction de l'élément séparateur 3. En fait, l'isolation électrique est réalisée par l'épaisseur de la couche formant l'élément séparateur.

De préférence, la porosité de l'élément séparateur 3 aux ions de l'électrolyte du dispositif supercondensateur est conférée uniquement par les parties des trous débouchants délimitées par l'élément séparateur 3. Autrement dit, les parties pleines de l'élément séparateur 3 entre les parties de trous débouchants correspondantes ne permettent pas aux ions de passer en direction de l'électrode (les ions passent alors uniquement dans les trous correspondants). Ainsi, les trous débouchants 5 sont dimensionnés de sorte à permettre la circulation des ions de l'électrolyte du dispositif supercondensateur.

Ainsi, l'agencement forme un composant monolithique, grâce à la fixation de l'élément séparateur 3 à l'électrode 1, comprenant les fonctions d'une électrode et d'un élément séparateur, cet agencement permet d'optimiser toutes les grandeurs qui constituent un supercondensateur (S, e, $k_{ox}$ : permittivité relative liée au matériau utilisé dans le cadre de l'élément séparateur). Cet agencement diminue le nombre de pièces à manipuler puisque les fonctions sont combinées, l'assemblage du dispositif superconducteur mettant en oeuvre un tel agencement est donc simplifié.

De plus, cet agencement particulier permet de réduire la distance e entre les électrodes d'un dispositif supercondensateur. Electriquement parlant, on peut diminuer e jusqu'à aller au contact, entre l'électrode d'un agencement et l'élément séparateur d'un autre agencement, puisque l'élément séparateur 3 est électriquement isolant. Cependant, pour maintenir l'effet supercondensateur, il faut maintenir un peu d'électrolyte, il est donc préférable de garder une distance de quelques nanomètres, par exemple une distance supérieure à 2nm, de sorte à séparer l'électrode d'un agencement avec l'élément séparateur d'un autre agencement. Ceci est avantageux dans le sens où en prenant en compte l'élément séparateur, la capacité du condensateur est définie par $C=k_{ox}\varepsilon_r\varepsilon_0 S/e$ ; et si e est très petit, il est plus facile de maximiser la capacité du dispositif supercondensateur tout en favorisant sa miniaturisation.

En outre, l'élément électriquement conducteur 4 de l'électrode 1 étant perforé, cela augmente la surface équivalente $S_{eq}$ des électrodes qui est dépendante du nombre de trous réalisés et de leur profondeur ($S_{eq}$= z*$S_0$ où z représente un coefficient multiplicateur obtenu grâce à la présence des trous, avec $S_0$ la surface active totale initiale sans trous).

On comprend avantageusement ici que la perforation de l'électrode est résultante de la présence des trous débouchants. Autrement dit, ce sont les parties des trous débouchants délimitées par l'électrode (et plus particulièrement par l'élément électriquement conducteur) qui permettent d'augmenter la surface de l'électrode concernée destinée à être en contact avec l'électrolyte, et ainsi d'augmenter la surface équivalente des électrodes du dispositif supercondensateur.

A titre d'exemple, en considérant des trous dont le diamètre $\phi_t$ est supérieur ou égal à 100 nm, il est possible d'obtenir une densité de trous $d_t$ supérieure ou égale à $10^{10}$ trous par cm$^2$. En fonction de l'épaisseur de l'élément électriquement conducteur 4 de l'électrode 1, la profondeur $P_t$ des trous pourrait être comprise entre $100\mu m$ et $500\mu m$. En prenant $S_0$ la surface des électrodes sans trous, on obtient une surface équivalente $S_{eqt}$ avec trous donnée par la formule :

$$S_{eqt}= S_0 \left[1+\pi \frac{\phi_t}{4} d_t (4P_t - \phi_t)\right].$$

Selon un exemple chiffré en prenant $d_t = 10^{14}$ trous au m$^2$, $P_t = 500\mu m$, $\phi_t = 100*10^{-9}$ m, et $S_0 = 1$ cm$^2$, on obtient $S_{eqt} = 1,5$ m$^2$ soit $1,5 \cdot 10^4$ fois $S_0$. Ceci permet d'augmenter grandement la capacité du supercondensateur lorsque $S_{eqt}$ est injecté dans l'équation donnant C. $S_{eqt}$ correspond à la surface active, c'est-à-dire à deux surfaces en regard de deux électrodes se faisant face.

Sur la figure 3, dans l'optique d'améliorer la surface équivalente de l'électrode 1, cette dernière peut comporter une pluralité de nano-éléments 6, notamment des nanofils ou des nanotubes électriquement conducteurs, s'étendant à partir d'une seconde face 4b de l'élément électriquement conducteur 4, opposée à la première face 4a de l'élément électriquement conducteur 4 où est fixé l'élément séparateur 3. L'agencement étant troué par une pluralité de trous débouchants 5 dont des orifices débouchent au niveau de la seconde face 4b de l'élément électriquement conducteur, ces nano-éléments 6 s'étendent à partir de zones de la seconde face 4b situées entre les orifices. Bien entendu, les nano-éléments 6 sont en contact électrique avec l'élément électriquement conducteur 4 de sorte à former l'électrode 1.

Dans le cas où on rajoute des nanofils, la surface équivalente ($S_{eqt+f}$) est donnée par la formule suivante :

$$S_{eqt+f} = S_0 \left[1+\pi \frac{\phi_t}{4} d_t (4P_t - \phi_t) + \pi \frac{\phi_f}{4} d_f ( \phi_f + 4 H_f)\right]$$

avec le diamètre $\phi_t$ des trous, la densité $d_t$ des trous, la profondeur $P_t$ des trous, en prenant des nanofils de diamètre $\phi_f$ supérieur ou égal à 2 nm, la densité des nanofils $d_f$ sera alors supérieure ou égale à $10^{10}$ nanofils par cm$^2$, la hauteur $H_f$ des nanofils peut être supérieure ou égale à 100 nm.

Selon un exemple chiffré en prenant $d_t = 10^{14}$ trous au m$^2$, $P_t = 500\mu m$, $\phi_t = 100*10^{-9}$ m, $d_f = 10^{14}$ trous au m$^2$, $H_f = 1\mu m$, $\phi_f = 5 \cdot 10^{-9}$ m, et $S_0 = 1$ cm$^2$, nous obtenons pour $S_{eqt+f} = 3$m$^2$ soit $3*10^4$ fois $S_0$. Il est donc clair que l'utilisation des nanofils en combinaison avec les trous sera préférée pour maximiser la capacité du dispositif supercondensateur.

On comprend de ce qui a été dit ci-dessus que tout type de nano-élément ou nanostructure connu permettant d'améliorer la surface efficace de l'électrode pourra être utilisé. Dès lors, l'homme du métier de la microélectronique pourra utiliser ses connaissances générales pour adapter des nano-éléments existants à l'agencement tel que décrit.

L'électrode peut comporter un matériau semi-conducteur ou un métal. Ce matériau semi-conducteur peut au moins former l'élément électriquement conducteur 4 de l'électrode 1. Ainsi, l'électrode peut être formée en tout ou partie par un matériau choisi parmi le silicium, le germanium, un alliage à base de SiGe, l'arséniure ou nitrure de gallium (GaAs ou GaN), ou encore du phosphure d'indium (InP). Ce semi-conducteur peut être fortement dopé de sorte à être électriquement conducteur. Ceci présente l'avantage de faciliter l'exploitation des technologies de la microélectronique afin de miniaturiser les dispositifs supercondensateurs pour, par exemple, les intégrer sur puce. L'électrode peut aussi être un métal comme par exemple l'inox, Ni, Al, Cu, etc.

L'élément séparateur 3 peut être une couche diélectrique trouée, par exemple une couche d'oxyde d'épaisseur supérieure à 1nm, et par exemple comprise entre 2nm et 3nm. Cet oxyde peut, par exemple, être un film diélectrique de $SiO_2$, $Si_yN_x$, etc. En utilisant une couche d'oxyde associée à l'électrode 1 comme élément séparateur 3, il est possible d'optimiser la valeur e d'un dispositif supercondensateur mettant en oeuvre l'agencement décrit uniquement en fonction de la tension de claquage de la couche diélectrique qui est fonction de la résistivité. Par exemple pour le $SiO_2$, la valeur de la résistivité est comprise entre $10^{12}$ et $10^{18}$ $\Omega.m$. Dès lors, il est possible d'obtenir une couche d'oxyde supérieure au nanomètre Ceci permettra une grande facilité d'assemblage. $k_{ox}$ dépendra de l'oxyde qui sera formé sur l'élément électriquement conducteur 4 de l'électrode 1 (pour le $SiO_2$ le coefficient $k_{ox}$ = 3,9). Il est aussi possible d'utiliser des oxydes à forte permittivité ("high k") pour augmenter la capacité d'un dispositif supercondensateur et/ou pour diminuer l'épaisseur de la couche isolante.

Lorsque l'élément électriquement conducteur 4 est réalisé à base de matériau conducteur comme du silicium fortement dopé, l'élément séparateur peut être obtenu par oxydation de l'élément électriquement conducteur 4, ou par dépôt d'un film diélectrique sur une face de l'élément électriquement conducteur 4.

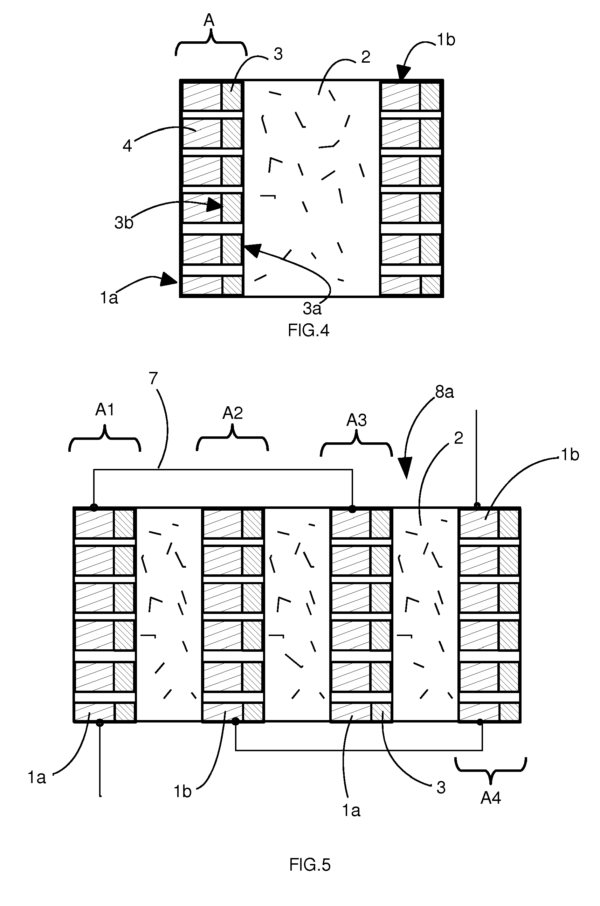

Sur la figure 4, un dispositif supercondensateur peut comporter au moins un agencement A tel que décrit précédemment (comme par exemple ceux des figures 2 ou 3) dont une face 3a de l'élément séparateur 3, opposée à la face 3b de l'élément séparateur en contact avec l'élément électriquement conducteur 4, est en contact avec un électrolyte 2 du dispositif supercondensateur.

Sur la figure 4, l'agencement A comporte une électrode 1a faisant par exemple office respectivement de cathode ou d'anode. En outre l'agencement A est séparé par l'électrolyte 2 d'une autre électrode 1b faisant par exemple office respectivement d'anode ou de cathode.

Lorsque le dispositif comporte un agencement muni d'une pluralité de nano-éléments tel que décrit ci-dessus, l'extrémité libre d'au moins un nano-élément est en contact avec l'élément séparateur d'un autre agencement du dispositif. De préférence, une pluralité de nano-éléments d'un agencement est en contact avec l'élément séparateur de l'autre agencement. Ceci permet de diminuer les dimensions du dispositif. Dans le cadre où l'on ne cherche pas à diminuer à tout prix les dimensions du dispositif, le contact de la pluralité de nano-éléments d'un agencement avec l'élément séparateur de l'autre agencement n'est pas nécessaire.

Selon une mise en oeuvre du dispositif supercondensateur illustré à la figure 5, ce dernier comporte une pluralité d'agencements A1, A2, A3, A4 tels que décrits précédemment. Deux agencements adjacents A3, A4 sont séparés par de l'électrolyte 2 de sorte à former un élément unitaire supercondensateur. L'électrolyte 2 de l'élément unitaire (A3, A4, 2) est en contact avec l'élément séparateur 3 de l'un des agencements de l'élément unitaire (A3, A4, 2) et avec l'électrode 1b de l'autre des agencements de l'élément unitaire (A3, A4, 2). Autrement dit, lorsque l'on a deux agencements adjacents, la face de l'élément électriquement conducteur de l'électrode de l'un des agencements, opposée à l'élément séparateur du même agencement, est orientée vers la face de l'élément séparateur de l'autre agencement qui est opposée à l'électrode de l'autre agencement.De plus, dans un cas avantageux, les parties des trous débouchants délimitées par l'électrode (et en particulier par l'élément électriquement conducteur de l'électrode) permettent le passage des ions de l'électrolyte de part et d'autre de l'électrode. Ainsi, l'électrolyte disposé de part et d'autre d'un agencement peut être commun.

La figure 5 illustre un exemple comprenant quatre agencements A1, A2, A3, A4 sans nano-éléments empilés les uns sur les autres. Les agencements sont séparés deux à deux par un électrolyte 2. Bien entendu, les agencements pourraient aussi comporter chacun des nano-éléments tels que définis ci-dessus afin d'augmenter la capacité du dispositif supercondensateur. En fait l'électrolyte 2 visé ci-dessus peut faire partie intégrante d'un électrolyte global commun à tous les agencements, il y a donc continuité dans la conduction ionique de l'électrolyte des différents agencements.

On comprend alors que de manière générale applicable aux différentes mises en oeuvres du dispositif supercondensateur, l'électrolyte séparant les agencements deux à deux fait partie d'un électrolyte global commun aux agencements (et de préférence à tous les agencements).

Selon une mise en oeuvre illustrée à la figure 5, au moins une partie de la pluralité d'agencements peut former, notamment avec l'électrolyte associé, un premier ensemble 8a d'éléments unitaires supercondensateurs reliés électriquement en parallèle. Pour cela, le dispositif peut comporter un empilement d'agencements formé par une alternance anode/cathode. Toutes les anodes 1a sont reliées électriquement entre elles, et toutes les cathodes 1b sont reliées électriquement entre elles. Ce premier ensemble peut, de préférence, comporter tous les agencements de la pluralité d'agencement du dispositif supercondensateur.

Dans le cas d'une mise en parallèle telle que décrite comprenant 2n électrodes chacune dotée d'une capacité individuelle Ci, et d'une résistance interne $\frac{1}{2}$ Ri, on obtient avec une connexion alternée deux demi-ensembles de n électrodes en série avec une capacité nCi. La capacité globale C du montage en parallèle est telle que :

$$1/C = 1/nCi + 1/nCi$$

Dès lors la capacité C de l'ensemble est C = $\frac{1}{2}$ nCi, l'énergie stockée E est E = $\frac{1}{4}$ nCiU$^2$, et la puissance P est P = U$^2$/4Rs = U$^2$/4nRi, avec Rs = nRi (Rs étant la résistance série totale, correspondant aussi à la résistance interne plus les résistances de contact sensiblement négligeables), U la tension aux bornes de l'empilement identique à celle d'un élément unitaire constitué de deux électrodes. Dans cette configuration on favorise la capacité du dispositif supercondensateur.

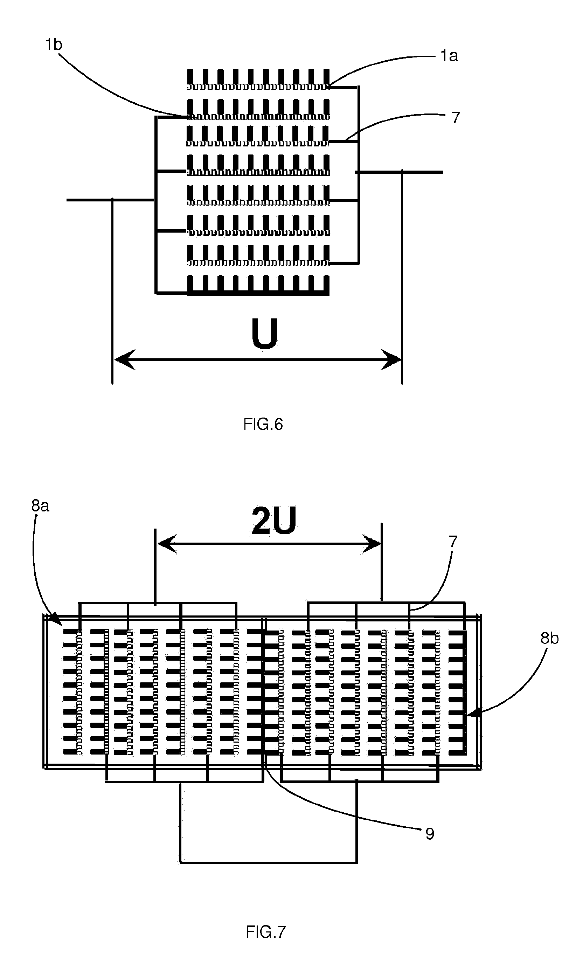

La figure 6 illustre plus en détail une mise en parallèle à base de huit électrodes munies de nanofils sur une face et recouverte de l'élément séparateur sur une autre face opposée à celle des nanofils, ces électrodes sont interconnectées une sur deux. Ainsi on obtient donc un demi-ensemble d'électrodes 1a reliées électriquement entre elles et un autre demi-ensemble d'électrodes 1b reliées électriquement entre elles. Dans cette configuration on a n = 4 et C = 2Ci, E = CiU$^2$; P = U$^2$/16Ri. Dans cet exemple à huit agencements, on a sept éléments unitaires.

Selon une mise en oeuvre particulière illustrée à la figure 7, seule une partie de la pluralité d'agencements forme le premier ensemble 8a d'éléments unitaires reliés électriquement en parallèle, dès lors une autre partie de la pluralité d'agencements du dispositif peut former un deuxième ensemble 8b d'éléments unitaires supercondensateurs reliés électriquement en parallèle, les premier et deuxième ensembles étant reliés électriquement en série. Ceci permet d'augmenter la tension du dispositif tout en gardant une capacité élevée. L'exemple donné est à deux ensembles d'éléments unitaires supercondensateurs, cependant l'homme du métier pourra adapter le nombre des ensembles en fonction des caractéristiques électriques voulues de capacité et/ou de tension du dispositif supercondensateur.

De préférence, dans cette mise en oeuvre particulière, les premier et deuxième ensembles d'éléments unitaires supercondensateurs sont séparés de sorte à empêcher la conduction ionique entre l'électrolyte du premier ensemble 8a et l'électrolyte du deuxième ensemble 8b. Cette séparation permet la mise en série. Pour cela, les premier et deuxième ensembles 8a, 8b peuvent chacun être enfermé dans un contenant d'électrolyte configuré pour éviter la mise en court-circuit des agencements d'un même contenant, et pour laisser passer les ions de l'électrolyte entre les agencements des différents éléments unitaires supercondensateur d'un même contenant. Les deux ensembles peuvent être solidarisés par une plaque 9 électriquement isolante par exemple en contact avec un premier type d'électrode du premier ensemble et un deuxième type d'électrode du deuxième ensemble. Cette plaque 9 réalise une fonction d'étanchéité entre les contenants.

De préférence, le dispositif supercondensateur comporte pour chaque électrode 1a, 1b un élément de liaison 7 (figures 5, 6 et 7) relié électriquement à ladite électrode 1a, 1b par câblage de type microélectronique ultrasonique ou par thermocompression.

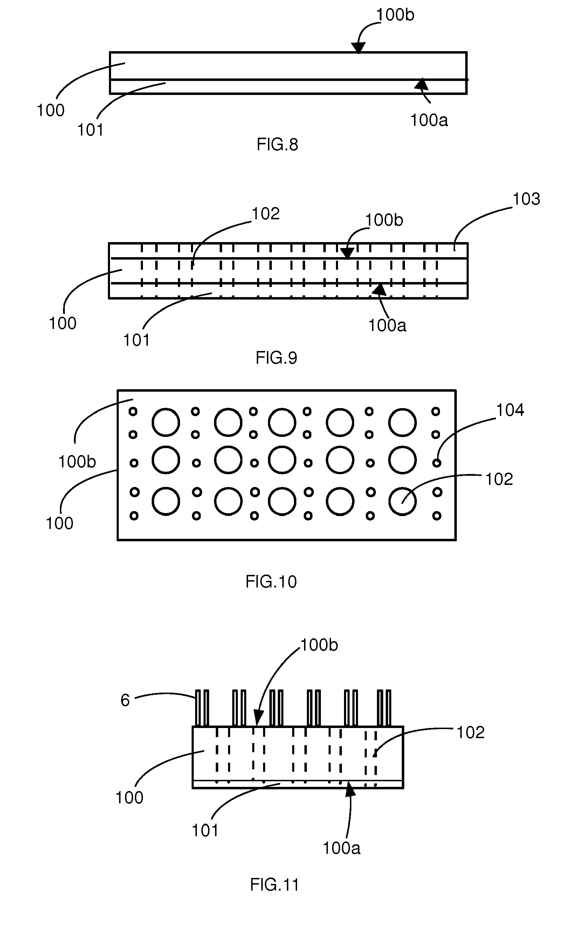

Comme illustré aux figures 8 à 11, l'agencement pour dispositif supercondensateur peut être réalisé selon un procédé de fabrication d'au moins un agencement comprenant une étape dans laquelle on prévoit un substrat 100 électriquement conducteur, notamment à base de semi-conducteur de préférence fortement dopé. Au moins une partie de ce substrat 100 est destinée à former l'élément électriquement conducteur de l'agencement. Le procédé comporte en outre une étape de formation, au niveau d'une première face 100a du substrat 100, d'une couche en matériau électriquement isolant 101 dont au moins une partie est destinée à former l'élément séparateur, et une étape de formation d'une pluralité de trous 102 (figure 9) débouchants traversant à la fois le substrat 100 et la couche en matériau électriquement isolant 101.

En fait, le substrat 100 peut être une plaque de silicium communément utilisée comme substrat dans la micro-électronique.

Tout l'ensemble obtenu à la fin du procédé pourra être utilisé en tant qu'unique agencement, ou pourra être segmenté en une pluralité d'agencements identiques destinés à être empilés avec interposition d'électrolyte.

La couche en matériau électriquement isolant 101 peut être une couche d'oxyde. Cette couche d'oxyde peut être réalisée par oxydation chimique ou thermique (formation de SiO$_2$ d'épaisseur nanométrique) du substrat 100. La voie chimique consiste au trempage du substrat dans une solution acide oxydante (Acide Sulfurique, Acide Nitrique), la réaction d'oxydation sera auto limitée par la formation d'une couche de SiO$_2$ nanométrique si le substrat est en silicium. La voie thermique consiste à effectuer un recuit thermique sous atmosphère oxydante. Cette technique est totalement maitrisée dans la filière micro-électronique, elle permet de réaliser des couches SiO$_2$ de l'ordre du nanomètre en partant d'un substrat 100 en silicium. Cette couche d'oxyde peut alternativement être réalisée par un dépôt conforme nanométrique par voie gazeuse ou évaporation de diélectriques différents comme le SiO$_2$, Si$_y$N$_x$, etc. Il pourra être prévu une étape préliminaire de dépôt d'une couche de protection sur la face non concernée, ou une étape postérieure pour nettoyer cette face.

Selon la mise en oeuvre utilisant les nano-éléments, le procédé peut comporter une étape de formation d'une pluralité de nano-éléments 6 (figures 9 à 11) s'étendant à partir d'une seconde face 100b du substrat 100, opposée à la première face 100a du substrat 100, lesdits les nano-éléments étant obtenus par croissance à partir de plots de catalyseurs disposés sur la seconde face 100b du substrat 100.

Avantageusement, les plots de catalyseurs sont formés avant la formation de la pluralité de trous.

Selon une mise en oeuvre, le substrat étant un métal, les plots de catalyseur sont formés par le métal restant entre les trous débouchants après la formation de la pluralité de trous débouchants.

Avantageusement, l'étape de formation de la pluralité de nano-éléments peut comporter une étape de dépôt d'une couche de catalyseur 103 sur la seconde face 100b du substrat 100 (figure 9), ladite couche de catalyseur 103 étant destinée à former les plots de catalyseur, comme par exemple des nanofils ou nanotubes, à partir du substrat 100. L'étape de dépôt de la couche de catalyseur 103 est réalisée avant la formation de la pluralité de trous débouchants de sorte que ces derniers traversent aussi ladite couche de catalyseur 103. Cette couche de catalyseur 103 peut être une couche en Or, en Cuivre, en Aluminium, etc. La couche de catalyseur 103 sera avantageusement déposée par dépôt uniforme contrôlé par évaporation (par exemple par dépôt physique en phase vapeur PVD). Une étape de refonte de la couche de catalyseur 103, réalisée après la formation de la pluralité de trous 102, permet de former une pluralité de plots de catalyseur, notamment de billes 104 de catalyseur (figure 10), au niveau de la seconde face 100b du substrat 100. En fait, cette étape de refonte permet de recuire l'ensemble percé de part en part, et lors de ce traitement thermique la couche de catalyseur 103 passe à l'état liquide et démouille en petites gouttelettes 104. Suivant l'épaisseur initiale de la couche de catalyseur 103 on obtient une distribution plus ou moins large des tailles de gouttelettes 104. Enfin, l'étape de formation de la pluralité de nano-éléments 6 comporte une étape de croissance des nano-éléments, à partir des plots 104 de catalyseur. Cette étape de croissance est réalisée de manière classique, par exemple par dépôt chimique de métal organique en phase vapeur « MOCVD ».

Les nano-éléments seront en général aussi en silicium dopé comme le substrat 100. Ces nano-éléments peuvent aussi être réalisés en Ge, en alliage de Si et Ge, en GaAs, en GaN, en Inp, etc.

De manière générale, la formation de la pluralité de trous débouchants peut être réalisée, par exemple, par lithogravure basée sur l'insolation de fines couches de résines organiques par de la lumière, des rayons X, ou par un faisceau d'électrons puis par leur révélation dans des solvants. Ensuite, une phase de gravure est entreprise soit par voie « humide ou chimique » en utilisant un acide fluorhydrique, ou par voie « sèche » en utilisant un bombardement ionique.

Après réalisation des trous, si une résine organique a été utilisée, cette dernière peut être retirée. Ce retrait sera réalisé avant l'étape de formation de la pluralité de nano-éléments.

Selon une variante, la couche en matériau électriquement isolant 101 est réalisée après avoir percé de part en part le substrat 100. Dans ce cas particulier, l'étape de dépôt de la couche en matériau électriquement isolant 101 est concomitante à la formation de trous débouchants traversant à la fois le substrat 100 et la couche en matériau électriquement isolant 101. Ce dépôt pourra avoir lieu avant le retrait de l'éventuelle couche de résine organique ayant servi à la lithogravure. Ceci a pour effet de protéger, notamment par oxydation, partiellement le trou au niveau du substrat. L'avantage ainsi obtenu est d'éviter un court-circuit entre deux électrodes si lors de l'assemblage un nano-élement venait à pénétrer dans un trou.

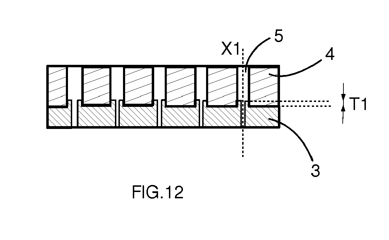

Autrement dit, comme illustré à la figure 12, au niveau d'un agencement, au moins un trou débouchant 5 de la pluralité de trous débouchants de l'agencement comporte un tronçon $T_1$ au niveau duquel l'élément séparateur 3 recouvre une portion de l'élément électriquement conducteur 4 le long de l'axe $X_1$ dudit trou. Bien entendu, de préférence, tous les trous de la pluralité de trous sont réalisés ainsi. Bien qu'aucun nano-élément ne soit représenté à la figure 12, des nano-éléments peuvent avantageusement s'étendre de la face de l'élément électriquement conducteur 4 opposée à l'élément séparateur 3.

Afin de contrôler au mieux le recouvrement au niveau du tronçon T1, il est possible de préparer la face du substrat 100 destinée à recevoir la couche 101 en matériau isolant en réalisant des trous borgnes au niveau de chaque futur trou débouchant. Ensuite, la couche 101 est déposée de sorte à tapisser la face concernée du substrat et les trous borgnes. Enfin, le substrat est percé au niveau de chaque trou borgne de sorte à former la pluralité de trous débouchants tout en prévoyant le recouvrement indiqué ci-dessus. Dans ce cas, le trou borgne a un diamètre supérieur au futur trou débouchant associé.

Par ailleurs, on comprend aussi qu'un procédé de fabrication d'un dispositif tel que décrit peut comporter au moins une étape de fabrication d'un agencement tel que décrit. Cette étape de fabrication de l'agencement correspond alors au procédé de fabrication de l'agencement tel que décrit ci-avant.

Un support d'enregistrement de données lisible par un calculateur, sur lequel est enregistré un programme informatique peut comprendre des moyens de codes de programme informatique de mise en oeuvre des étapes du procédé tel que décrit ci-dessus.

Un programme informatique peut comprendre un moyen de codes de programme informatique adapté à la réalisation des étapes du procédé tel que décrit, lorsque le programme est exécuté par un calculateur.

Comme indiqué précédemment, l'agencement décrit ci-dessus peut être mis en oeuvre dans un dispositif supercondensateur. Un tel dispositif supercondensateur peut être de type pseudocapacitif, de type à base d'oxyde métallique, de type à base de polymère conducteurs électronique intrinsèque ou de type asymétrique.

## Revendications

1. Agencement pour dispositif supercondensateur, ledit agencement comprenant une électrode (1) munie d'un élément électriquement conducteur (4), **caractérisé en ce qu'il** comporte un élément séparateur (3) fixé contre une première face (4a) de l'élément électriquement conducteur (4), l'agencement étant troué d'une pluralité de trous débouchants (5) qui traversent à la fois l'élément électriquement conducteur (4) et l'élément séparateur (3), et **en ce que** l'élément séparateur (3) troué forme une membrane d'une part électriquement isolante, et d'autre part poreuse à des ions d'un électrolyte du dispositif supercondensateur, et **en ce que** l'élément électriquement conducteur (4) de l'électrode (1) étant perforé, la surface équivalence des électrodes du dispositif supercondensateur est dépendante du nombre de trous réalisés et de leur profondeur.

2. Agencement selon la revendication 1, **caractérisé en ce que** l'électrode (1) comporte une pluralité de nano-éléments (6), notamment des nanofils ou des nanotubes électriquement conducteurs, s'étendant à partir d'une seconde face (4b) de l'élément électriquement conducteur (4), opposée à la première face (4a) de l'élément électriquement conducteur (4).

3. Agencement selon l'une des revendications 1 à 2, **caractérisé en ce que** l'élément séparateur (3) est une couche diélectrique trouée, par exemple une couche d'oxyde d'épaisseur supérieure à 1 nm.

4. Agencement selon l'une quelconque des revendications précédentes, **caractérisé en ce que** l'électrode (1) comporte un matériau semi-conducteur ou un métal.

5. Agencement selon l'une quelconque des revendications précédentes, **caractérisé en ce qu'**au moins un trou débouchant (5) de la pluralité de trous débouchants de l'agencement comporte un tronçon ($T_1$) au niveau duquel l'élément séparateur (3) recouvre une portion de l'élément électriquement conducteur (4) le long de l'axe ($X_1$) dudit trou (5).

6. Dispositif supercondensateur comportant au moins un agencement selon l'une quelconque des revendications précédentes dont une face (3a) de l'élément séparateur (3), opposée à la face (3b) de l'élément séparateur (3) en contact avec l'élément électriquement conducteur (4), est en contact avec un électrolyte (2) du dispositif supercondensateur.

7. Dispositif selon la revendication 6 comprenant un agencement selon la revendication 2, **caractérisé en ce que** l'extrémité libre d'au moins un nano-élément est en contact avec l'élément séparateur d'un autre agencement.

8. Dispositif selon l'une des revendications 6 ou 7, **caractérisé en ce qu'il** comporte une pluralité d'agencements (A1, A2, A3, A4) selon l'une quelconque des revendications 1 à 5, deux agencements adjacents (A3, A4) étant séparés par de l'électrolyte de sorte à former un élément unitaire supercondensateur, l'électrolyte (2) de l'élément unitaire (A3, A4, 2) étant en contact avec l'élément séparateur (3) de l'un des agencements (A3) de l'élément unitaire (A3, A4, 2) et avec l'électrode (1b) de l'autre des agencements (A4) de l'élément unitaire (A3, A4, 2).

9. Dispositif selon la revendication 8, **caractérisé en ce qu'**au moins une partie de la pluralité d'agencements forme un premier ensemble (8a) d'éléments unitaires supercondensateurs reliés électriquement en parallèle.

10. Dispositif selon la revendication 9, **caractérisé en ce qu'**une autre partie de la pluralité d'agencements forme un deuxième ensemble (8b) d'éléments unitaires supercondensateurs reliés électriquement en parallèle, le premier ensemble (8a) et le deuxième ensemble (8b) étant reliés électriquement en série.

11. Dispositif selon l'une quelconque des revendications 6 à 10, **caractérisé en ce qu'il** comporte pour chaque électrode (1a, 1b) un élément de liaison (7) relié électriquement à ladite électrode (1a, 1b) par câblage de type microélectronique ultrasonique ou par thermocompression.

12. Procédé de fabrication d'au moins un agencement pour dispositif supercondensateur selon la revendication 1, **caractérisé en ce qu'il** comporte les étapes suivantes:

- Prévoir un substrat (100) électriquement conducteur, notamment à base de semi-conducteur, dont au moins une partie est destinée à former l'élément électriquement conducteur (4) de l'agencement,
- Former, au niveau d'une première face (100a) du substrat (100), une couche en matériau électriquement isolant (101) dont au moins une partie est destinée à former l'élément séparateur de l'agencement,
- Former une pluralité de trous débouchants (102) traversant à la fois le substrat (100) et la couche (101) en matériau électriquement isolant.

13. Procédé selon la revendication précédente, **caractérisé en ce qu'il** comporte une étape de formation d'une pluralité de nano-éléments s'étendant à partir d'une seconde face (100b) du substrat (100), opposée à la première face (100a) du substrat (100), lesdits les nano-éléments étant obtenus par croissance à partir de plots de catalyseurs disposés sur la seconde face (100b) du substrat (100).

14. Procédé selon la revendication 13, **caractérisé en ce que** les plots de catalyseurs sont formés avant la formation de la pluralité de trous.

15. Procédé selon l'une des revendications 13 ou 14, **caractérisé en ce que** le substrat étant un métal, les plots de catalyseur sont formés par le métal restant entre les trous débouchants après la formation de la pluralité de trous.

16. Procédé selon la revendication 13, **caractérisé en ce que** l'étape de formation de la pluralité de nano-éléments comporte :

- une étape de dépôt d'une couche de catalyseur (103) sur la seconde face (100b) du substrat (100), ladite couche de catalyseur (103) étant destinée à former les plots de catalyseur, l'étape de dépôt de la couche de catalyseur (103) étant réalisée avant la formation de la pluralité de trous de sorte que chaque trou (102) de la pluralité de trous traverse aussi ladite couche de catalyseur (103),
- une étape de refonte de la couche de catalyseur (103), réalisée après la formation de la pluralité de trous, de sorte à former une pluralité de plots (104) de catalyseur, notamment de billes de catalyseurs, au niveau de la seconde face (100b) du substrat (100),
- une étape de croissance des nano-éléments à partir des plots (104) de catalyseur.

## Patentansprüche

1. Anordnung für eine Superkondensatorvorrichtung, wobei die Anordnung eine Elektrode (1) umfasst, die mit einem elektrisch leitenden Element (4) versehen ist, **dadurch gekennzeichnet, dass** sie ein Trennelement (3) umfasst, das an einer ersten Fläche (4a) des elektrisch leitenden Elements (4) befestigt ist, wobei die Anordnung mit einer Vielzahl von Durchgangslöchern (5) versehen ist, die sowohl das elektrisch leitende Element (4) als auch das Trennelement (3) durchqueren, und dass das gelochte Trennelement (3) eine Membran bildet, die einerseits elektrisch isolierend und andererseits für Ionen eines Elektrolyts der Superkondensatorvorrichtung porös ist, und dass, da das elektrisch leitende Element (4) der Elektrode (1) perforiert ist, die äquivalente Fläche der Elektroden der Superkondensatorvorrichtung von der Anzahl von hergestellten Löchern und ihrer Tiefe abhängig ist.

2. Anordnung nach Anspruch 1, **dadurch gekennzeichnet, dass** die Elektrode (1) eine Vielzahl von Nanoelementen (6), insbesondere elektrisch leitenden Nanodrähten oder Nanoröhren, umfasst, die sich von einer zweiten Fläche (4b) des elektrisch leitenden Elements (4) gegenüber der ersten Fläche (4a) des elektrisch leitenden Elements (4) erstrecken.

3. Anordnung nach einem der Ansprüche 1 bis 2, **dadurch gekennzeichnet, dass** das Trennelement (3) eine gelochte dielektrische Schicht ist, beispielsweise eine Oxidschicht mit einer Dicke über 1 nm.

4. Anordnung nach einem der vorhergehenden Ansprüche, **dadurch gekennzeichnet, dass** die Elektrode (1) ein Halbleitermaterial oder ein Metall umfasst.

5. Anordnung nach einem der vorhergehenden Ansprüche, **dadurch gekennzeichnet, dass** mindestens ein Durchgangsloch (5) der Vielzahl von Durchgangslöchern der Anordnung einen Abschnitt ($T_1$) umfasst, in dessen Bereich das Trennelement (3) einen Abschnitt des elektrisch leitenden Elements (4) entlang der Achse ($X_1$) des Loches (5) bedeckt.

6. Superkondensatorvorrichtung, umfassend mindestens eine Anordnung nach einem der vorhergehenden Ansprüche, wobei eine Fläche (3a) des Trennelements (3) gegenüber der Fläche (3b) des Trennelements (3), das mit dem elektrisch leitenden Element (4) in Kontakt ist, mit einem Elektrolyt (2) der Superkondensatorvorrichtung in Kontakt ist.

7. Vorrichtung nach Anspruch 6, umfassend eine Anordnung nach Anspruch 2, **dadurch gekennzeichnet, dass** das freie Ende mindestens eines Nanoelements mit dem Trennelement einer weiteren Anordnung in Kontakt ist.

8. Vorrichtung nach einem der Ansprüche 6 oder 7, **dadurch gekennzeichnet, dass** sie eine Vielzahl von Anordnungen (A1, A2, A3, A4) nach einem der Ansprüche 1 bis 5 umfasst, wobei zwei aneinandergrenzende Anordnungen (A3, A4) durch einen Elektrolyt getrennt sind, um ein einheitliches Superkondensatorelement zu bilden, wobei der Elektrolyt (2) des einheitlichen Elements (A3, A4, 2) mit dem Trennelement (3) einer der Anordnungen (A3) des einheitlichen Elements (A3, A4, 2) und mit der Elektrode (1b) der anderen der Anordnungen (A4) des einheitlichen Elements (A3, A4, 2) in Kontakt ist.

9. Vorrichtung nach Anspruch 8, **dadurch gekennzeichnet, dass** mindestens ein Teil der Vielzahl von Anordnungen eine erste Gesamtheit (8a) von einheitlichen Superkondensatorelementen bildet, die elektrisch parallel verbunden sind.

10. Vorrichtung nach Anspruch 9, **dadurch gekennzeichnet, dass** ein weiterer Teil der Vielzahl von Anordnungen eine zweite Gesamtheit (8b) von einheitlichen Superkondensatorelementen bildet, die elektrisch parallel verbunden sind, wobei die erste Gesamtheit (8a) und die zweite Gesamtxheit (8b) elektrisch in Serie verbunden sind.

11. Vorrichtung nach einem der Ansprüche 6 bis 10, **dadurch gekennzeichnet, dass** sie für jede Elektrode (1a, 1b) ein Verbindungselement (7) umfasst, das elektrisch mit der Elektrode (1a, 1b) durch mikroelektronische Ultraschallverkabelung oder durch Thermokompression verbunden ist.

12. Verfahren zur Herstellung mindestens einer Anordnung für eine Superkondensatorvorrichtung nach Anspruch 1, **dadurch gekennzeichnet, dass** es die folgenden Schritte umfasst:

- Vorsehen eines elektrisch leitenden Substrats (100), insbesondere auf Halbleiterbasis, von dem mindestens ein Teil dazu bestimmt ist, das elektrisch leitende Element (4) der Anordnung zu bilden,
- im Bereich einer ersten Fläche (100a) des Substrats (100) Bilden einer Schicht aus einem elektrisch isolierenden Material (101), von der mindestens ein Teil dazu bestimmt ist, das Trennelement der Anordnung zu bilden,
- Bilden einer Vielzahl von Durchgangslöchern (102), die sowohl durch das Substrat (100) als auch durch die Schicht (101) aus elektrisch isolierendem Material hindurchgehen.

13. Verfahren nach dem vorhergehenden Anspruch, **dadurch gekennzeichnet, dass** es einen Schritt der Bildung einer Vielzahl von Nanoelementen umfasst, die sich von einer zweiten Fläche (100b) des Substrats (100) gegenüber der ersten Fläche (100a) des Substrats (100) aus erstrecken, wobei die Nanoelemente durch Wachstum aus Katalysatorkontaktstellen erhalten werden, die auf der zweiten Fläche (100b) des Substrats (100) angeordnet sind.

14. Verfahren nach Anspruch 13, **dadurch gekennzeichnet, dass** die Katalysatorkontaktstellen vor der Bildung der Vielzahl von Löchern gebildet werden.

15. Verfahren nach einem der Ansprüche 13 oder 14, **dadurch gekennzeichnet, dass**, da das Substrat ein Metall ist, die Katalysatorkontaktstellen von dem Restmetall zwischen den Durchgangslöchern nach der Bildung der Vielzahl von Löchern gebildet werden.

16. Verfahren nach Anspruch 13, **dadurch gekennzeichnet, dass** der Schritt der Bildung der Vielzahl von Nanoelementen umfasst:

- einen Schritt des Aufbringens einer Katalysatorschicht (103) auf die zweite Fläche (100b) des Substrats (100), wobei die Katalysatorschicht (103) dazu bestimmt ist, die Katalysatorkontaktstellen zu bilden, wobei der Schritt des Aufbringens der Katalysatorschicht (103) vor der Bildung der Vielzahl von Löchern erfolgt, so dass jedes Loch (102) der Vielzahl von Löchern auch die Katalysatorschicht (103) durchquert,
- einen Schritt des Umschmelzens der Katalysatorschicht (103), der nach der Bildung der Vielzahl von Löchern erfolgt, um eine Vielzahl von Katalysatorkontaktstellen (104), insbesondere von Katalysatorkugeln, im Bereich der zweiten Fläche (100b) des Substrats (100) zu bilden,
- einen Schritt des Wachstums der Nanoelemente aus den Katalysatorkontaktstellen (104).

**Claims**

1. Arrangement for supercapacitor device, said arrangement comprising an electrode (1) provided with an electrically conductive element (4), **characterized in that** it comprises a separator element (3) fixed against a first face (4a) of the electrically conductive element (4), the arrangement comprising a plurality of through holes (5) which pass through both the electrically conductive element (4) and the separator element (3), and **in that** the holed separator element (3) forms a membrane that is both electrically insulating and porous to ions of an electrolyte of the supercapacitor device, and **in that** the electrically conductive element (4) of the electrode (1) being perforated, the equivalent surface area of the electrodes of the supercapacitor device is dependent on the number of holes made and on their depth.

2. Arrangement according to Claim 1, **characterized in that** the electrode (1) comprises a plurality of nano-elements (6), in particular electrically conductive nanowires or nanotubes, extending from a second face (4b) of the electrically conductive element (4), which is opposite to the first face (4a) of the electrically conductive element (4).

3. Arrangement according to one of Claims 1 and 2, **characterized in that** the separator element (3) is a dielectric layer comprising holes, for example a layer of oxide with a thickness greater than 1 nm.

4. Arrangement according to any one of the preceding claims, **characterized in that** the electrode (1) comprises a semiconductor material or a metal.

5. Arrangement according to any one of the preceding claims, **characterized in that** at least one through hole (5) from the plurality of through holes of the arrangement comprises a section ($T_1$) where the separator element (3) covers a portion of the electrically conductive element (4) along the axis ($X_1$) of said hole (5).

6. Supercapacitor device comprising at least one arrangement according to any one of the preceding claims, in which one face (3a) of the separator element (3), opposite to the face (3b) of the separator element (3) in contact with the electrically conductive element (4), is in contact with an electrolyte (2) of the supercapacitor device.

7. Device according to Claim 6 comprising an arrangement according to Claim 2, **characterized in that** the free end of at least one nano-element is in contact with the separator element of another arrangement.

8. Device according to one of the preceding claims 6 or 7, **characterized in that** it comprises a plurality of arrangements (A1, A2, A3, A4) according to any one of Claims 1 to 5, two adjacent arrangements (A3, A4) being separated by electrolyte so as to form a unitary supercapacitor element, the electrolyte (2) of the unitary element (A3, A4, 2) being in contact with the separator element (3) of one of the arrangements (A3) of the unitary element (A3, A4, 2) and with the electrode (1b) of the other arrangement (A4) of the unitary element (A3, A4, 2).

9. Device according to Claim 8, **characterized in that** at least a part of the plurality of arrangements forms a first set (8a) of unitary supercapacitor elements electrically linked in parallel.

10. Device according to Claim 9, **characterized in that** another part of the plurality of arrangements forms a second set (8b) of unitary supercapacitor elements electrically linked in parallel, the first set (8a) and the second set (8b) being electrically linked in series.

11. Device according to any one of Claims 6 to 10, **characterized in that** it comprises, for each electrode (1a, 1b), a link element (7) electrically linked to said electrode (1a, 1b) by wiring of ultrasonic microelectronic type or by thermocompression.

12. Method for fabricating at least one arrangement for supercapacitor device according to Claim 1, **characterized in that** it comprises the following steps:

- providing an electrically conductive substrate (100), in particular semiconductor-based, at least a part of which is intended to form the electrically conductive element (4) of the arrangement,
- forming, on a first face (100a) of the substrate (100), a layer of electrically insulating material (101), at least a part of which is intended to form the separator element of the arrangement,
- forming a plurality of through holes (102) passing through both the substrate (100) and the layer (101) of electrically insulating material.

13. Method according to the preceding claim, **characterized in that** it comprises a step of formation of a plurality of nano-elements extending from a second face (100b) of the substrate (100), which is opposite to the first face (100a) of the substrate (100), said nano-elements being obtained by growth from bumps of catalysts positioned on the second face (100b) of the substrate (100).

14. Method according to Claim 13, **characterized in that** the bumps of catalysts are formed before the formation of the plurality of holes.

15. Method according to one of Claims 13 and 14, **characterized in that** the substrate being a metal, the bumps of catalyst are formed by the metal remaining between the through holes after the formation of the plurality of holes.

16. Method according to Claim 13, **characterized in that** the step of formation of the plurality of nano-elements comprises:

- a step of deposition of a layer of catalyst (103) on the second face (100b) of the substrate (100), said layer of catalyst (103) being intended to form the bumps of catalyst, the step of deposition of the layer of catalyst (103) being carried out before the formation of the plurality of holes so that each hole (102) from the plurality of holes also passes through said layer of catalyst (103),
- a step of remelting of the layer of catalyst (103), carried out after the formation of the plurality of holes, so as to form a plurality of bumps (104) of catalyst, notably of catalyst balls, on the second face (100b) of the substrate (100),
- a step of growth of the nano-elements from the bumps (104) of catalyst.

FIG.1 (art antérieur)

FIG.2

FIG.3

FIG.4

FIG.5

FIG.6

FIG.7

FIG.8

FIG.9

FIG.10

FIG.11

FIG.12

**EP 2 680 287 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2009016787 A